(19) Europäisches Patentamt
European Patent Office
Office européen des brevets

(11) Veröffentlichungsnummer: **0 004 309**
**B1**

(12) # EUROPÄISCHE PATENTSCHRIFT

(45) Veröffentlichungstag der Patentschrift: **09.12.81**

(51) Int. Cl.³: **C 08 G 18/18,** C 07 C 87/20

(21) Anmeldenummer: **79100659.6**

(22) Anmeldetag: **06.03.79**

(54) **Katalysator für das Polyisocyanatpolyadditionsverfahren und Verfahren zur Herstellung von Polyurethankunststoffen.**

(30) Priorität: **21.03.78 DE 2812256**

(43) Veröffentlichungstag der Anmeldung: **03.10.79 Patentblatt 79/20**

(45) Bekanntmachung des Hinweises auf die Patenterteilung: **09.12.81 Patentblatt 81/49**

(84) Benannte Vertragsstaaten: **BE DE FR GB IT NL SE**

(56) Entgegenhaltungen:

DE-A-2 624 527
FR-A-1 135 863
FR-A-1 146 889
GB-A- 848 911
GB-A-1 083 394

(73) Patentinhaber: **BAYER AG, Zentralbereich Patente, Marken und Lizenzen, D-5090 Leverkusen 1, Bayerwerk (DE)**

(72) Erfinder: **Haas, Peter, Dr., Zwengenberger Strasse 43, D-5657 Haan 1 (DE)**
Erfinder: **Blahak, Johannes, Dr., Andreas-Gryphius-Strasse 7, D-5000 Köln 80 (DE)**
Erfinder: **Meiners, Hans-Joachim, Dr., Ringstrasse 25, D-5090 Leverkusen (DE)**
Erfinder: **Mormann, Werner, Dr., Odenthaler Strasse 62, D-5090 Leverkusen (DE)**
Erfinder: **Kleimann, Helmut, Dr., Meitlecher Strasse 6, D-5090 Leverkusen (DE)**
Erfinder: **Sommerfeld, Claus, Dr., Andreas-Gryphius-Strasse 22, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

# Katalysator für das Polyisocyanatpolyadditionsverfahren und Verfahren zur Herstellung von Polyurethankunststoffen

Die vorliegende Erfindung betrifft neuartige Katalysatoren auf Basis linearer Polyamine mit mindestens 3 tertiären Stickstoffatomen für die Herstellung von Polyurethankunststoffen (vorzugsweise von Polyurethanschaumstoffen). Kennzeichnend für die erfindungsgemässen Katalysatoren ist, dass ein Teil der tertiären Stickstoffatome durch aliphatische Carbonsäuren neutralisiert ist.

In der DE–Offenlegungsschrift 26 24 527 wird ein Verfahren zur Herstellung von gegebenenfalls zellförmigen Polyurethankunststoffen beschrieben, in welchem als Katalysatoren für die Polyisocyanat-Polyadditionsreaktion Verbindungen der allgemeinen Formel

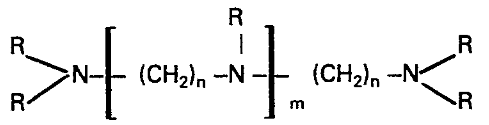

eingesetzt werden, in welcher die Gruppen R gleich oder verschieden sind und für Alkylreste mit 1 bis 5 C-Atomen stehen, m eine ganze Zahl zwischen 2 und 7 bedeutet und die ganzen Zahlen n gleich oder verschieden sind und für 2 oder 3 stehen.

Aminkatalysatoren dieser Art beschleunigen vorteilhafterweise sowohl die Treibreaktion als auch die Vernetzungsreaktion bei der Herstellung von Polyurethanschaumstoffen in optimal aufeinander abgestimmter Weise. Mit Hilfe dieser Katalysatoren hergestellte Produkte haben gleichmässige Materialeigenschaften, insbesondere eine einwandfreie Porenstruktur und einen geringen Schrumpf. Ausserdem sind die Katalysatoren geruchsfrei.

Für bestimmte Anwendungszwecke (insbesondere das Ausschäumen komplizierterer Formteile) haben aber Polyurethansysteme, welche mit den Aminen gemäss DE-Offenlegungsschrift 26 24 527 katalysiert sind, eine zu kurze Startzeit, insbesondere wenn in der Rezeptur reaktive Polyisocyanate auf Basis phosgenierter Anilin/Formaldehyd-Kondensationsprodukte eingesetzt werden. Aus der DE-Offenlegunsschrift 23 57 859 ist es bekannt, die Aktivität von tertiären Aminkatalysatoren durch Salzbildung mit bestimmten in α-Stellung substituierten Carbonsäuren zu reduzieren. Wie sich in der Praxis herausstellte, bewirken derartige Salze von tertiären Aminen zwar eine Verlängerung der Startzeit, führen jedoch zu einer technisch unerwünschten Verlängerung der Abbindezeit bzw. der Entformungszyklen, wobei die Schäume häufig auch kollabieren. Ausserdem stören in vielen Fällen die bei der thermischen Zersetzung der α-substituierten Carbonsäuren freiwerdenden Zersetzungsprodukte.

Obwohl in der DE-Offenlegungsschrift 23 57 859 ausgeführt wird, dass unsubstituierte Carbonsäuren wie beispielsweise Essigsäure für die Einstellung der katalytischen Aktivität von tertiären Aminen ungeeignet sind, wurde nunmehr überraschenderweise gefunden, dass man Verschäumungskatalysatoren mit der gewünschten optimalen Kombination von Eigenschaften (Verzögerung der Startzeit des Reaktionsgemisches, ohne dass die Entformungszeit zu sehr verlängert wird) erhält, wenn man lineare, tertiäre Stickstoffatome enthaltende Polyamine, wie sie beispielsweise in der DE–Offenlegungsschrift 26 24 527 beschrieben werden, mit 15 bis 50 % der äquivalenten Menge einer aliphatischen Carbonsäure, welche 1 bis 25, vorzugsweise 1 bis 18, C-Atome enthält, teilweise in die Salzform überführt. Aus der FR–PS 1 135 863 ist die Herstellung von Polyurethanschaumstoffen unter Verwendung von neutralen, sauren oder basischen Salzen tertiärer Amine und Säuren einschliesslich Carbonsäuren als Katalysatoren bekanntgeworden, wobei als Amine auch solche der allgemeinen Formel

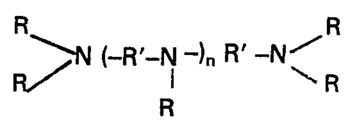

(R = Methyl- oder Äthyl,
R' = Alkylen)
offenbart werden. Demgegenüber stellen die erfindungsgemässen teilneutralisierten Katalysatoren eine spezielle Auswahl dar, die insbesondere bei der Herstellung von formgeschäumten Schaumstoffen, wie oben ausgeführt, ein ausgewogenes Verhältnis von Startzeit und Steigzeit bei wünschenswert niedriger Katalysatorkonzentration gewährleisten, was bei höher- oder gar vollneutralisierten Salzen mit gleichem Komponentenaufbau nicht erreicht werden kann.

Gegenstand der vorliegenden Erfindung sind somit Katalysatoren für das Polyisocyanat-Polyadditionsverfahren der allgemeinen Formel

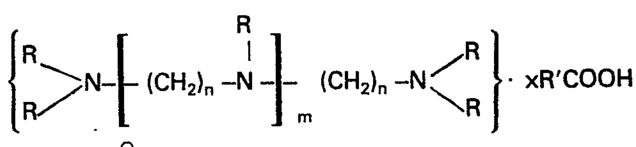

in welcher die Gruppen R gleich oder verschieden sind und für Alkylreste mit 1 bis 5 C-Atomen stehen,
m eine ganze Zahl zwischen 1 und 7 bedeutet, die ganzen Zahlen n gleich oder verschieden sind und für 2 oder 3 stehen, und
R' Wasserstoff oder einen aliphatischen Rest mit 1 bis 25 C-Atomen bedeutet, welcher gegebenenfalls verzweigt ist und gegebenenfalls olefinische Doppelbindungen enthält, dadurch gekennzeichnet, dass
x eine Zahl im Bereich zwischen 0,15 (m+2) und 0,5 (m+2) darstellt.

Gegenstand der Erfindung ist auch ein Verfahren zur Herstellung von gegebenenfalls zellförmigen Polyurethankunststoffen durch Umsetzung von
a) Polyisocyanaten mit
b) höhermolekularen Verbindungen mit mindestens 2 gegenüber Isocyanaten reaktionsfähigen Wasserstoffatomen sowie gegebenenfalls
c) Kettenverlängerungsmitteln, in Gegenwart von
d) tertiären Aminen als Katalysatoren, gegebenenfalls unter Mitverwendung von
e) Treibmitteln, Stabilisatoren und weiteren an sich bekannten Zusatzstoffen, welches dadurch gekennzeichnet ist, dass als Komponente d) die erfindungsgemässen Katalysatoren eingesetzt werden. Für das erfindungsgemässe Verfahren geeignete Komponenten a, b, c und e werden im Detail in der DE-Offenlegungsschrift 26 24 527 beschrieben. Erfindungsgemäss besonders bevorzugt werden als Polyisocyanatkomponente die technischen Polyisocyanatgemische eingesetzt, welche durch Phosgenierung von Anilin-Formaldehyd-Kondensationsprodukten erhalten werden und im wesentlichen 4,4′-Diphenylmethandiisocyanat und 2,4′-Diphenylmethandiisocyanat neben geringen Mengen an 2,2′-Diphenylmethandiisocyanat sowie höheren Homologen enthalten. Bevorzugte höhermolekulare Polyhydroxylverbindungen sind Polyäther mit einem Molekulargewicht von 800 bis 10 000, vorzugsweise von 1000 bis 6000, welche durch Anlagerung von Äthylenoxid und/oder Propylenoxid an difunktionelle und/oder trifunktionelle Startermoleküle wie Propylenglykol und Trimethylolpropan erhalten werden.

Auch die Herstellung der den erfindungsgemässen Katalysatoren zugrundeliegenden linearen Polyamine mit tertiären Stickstoffatomen wird in der DE-Offenlegungsschrift 26 24 527 ausführlich beschrieben. Besonders geeignet sind erfindungsgemäss Polyamine der Formel

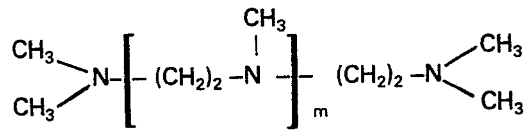

in welcher
m eine ganze Zahl zwischen 1 und 4, besonders bevorzugt die Zahlen 2 oder 3 darstellt sowie das Tetramin der Formel

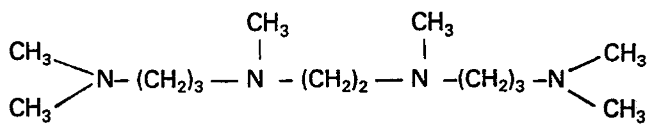

Diese Polyamine werden erfindungsgemäss mit einer solchen Menge einer aliphatischen Carbonsäure umgesetzt, dass 15 bis 50 % der tertiären Stickstoffatome neutralisiert werden. Bevorzugt werden für diesen Zweck erfindungsgemäss Carbonsäuren der Formeln

$C_yH_{(2y+1)}COOH$; $C_yH_{(2y-1)}COOH$; $C_yH_{(2y-3)}COOH$

eingesetzt, in welchen
y für eine Zahl zwischen 0 und 24, vorzugsweise zwischen 0 und 17, steht. Bevorzugte Säuren dieser Art sind Ameisensäure, Essigsäure und Ölsäure; Ameisensäure ist erfindungsgemäss besonders bevorzugt.

Vorzugsweise werden die erfindungsgemässen Katalysatoren durch Vermischen des Polyamins mit der gewünschten Menge an absoluter Carbonsäure bie ca. 10 bis 70 °C, besonders bevorzugt bei Raumtemperatur, hergestellt; gegebenenfalls kann man zwecks rascherer Homogenisierung bei der Neutralisation Wasser oder ein polares organisches Lösungsmittel mitverwenden, vorzugsweise wird jedoch in Abwesenheit von Wasser gearbeitet. Erfindungsgemäss bevorzugt ist es, die erfindungsgemässen Katalysatoren als 40 bis 80 Gew.-%ige, vorzugsweise 50 bis 70 Gew.-%ige Lösungen in einem niedermolekularen, mehrwertigen Alkohol, speziell Äthylenglykol, Diäthylenglykol, Triäthylenglykol, Triäthylenglykol, Propylenglykol, Dipropylenglykol oder Triäthylenglykol, einzusetzen.

Diese homogenen Lösungen der erfindungsgemässen Aktivatoren haben eine Viskosität von ca. 400–800 mPas bei 25 °C und sind somit über die üblichen Mischköpfe gut dosierbar.

Die folgenden Beispiele erläutern das erfindungsgemässe Verfahren. Wenn nicht anders vermerkt, sind Mengenangaben als Gewichtsteile bzw. als Gewichtsprozente zu verstehen.

Beispiel 1

Katalysatoren auf Basis von permethyliertem N,N″-Bis-(aminopropyl)-diäthylentriamin (Herstellung: Beispiel 1 von DE-Offenlegungsschrift 26 24 527).

a) 608 g Permethyl-N,N″-Bis-(aminopropyl)-diäthylentriamin werden mit 180 g wasserfreier Ameisensäure umgesetzt und anschliessend mit 320 g Diäthylenglykol homogenisiert. Es resultiert eine wasserhelle Flüssigkeit der Viskosität 480 mPa s (25 °C).

b) 608 g des Pentamins werden mit 240 g wasserfreier Essigsäure umgesetzt und anschliessend mit 350 g Diäthylenglykol homogenisiert. Es resultiert eine wasserhelle Flüssigkeit der Viskosität 490 mPa s (25 °C).

c) 608 des Pentamins werden mit 1130 g Ölsäure teilneutralisiert und mit 740 g Diäthylenglykol vermischt. Man erhält eine Flüssigkeit der Viskosität 650 mPa s (25 °C).

Beispiel 2

Katalysatoren auf Basis von permethyliertem

Tetraäthylenpentamin (Herstellung des Pentamins: analog zu Beispiel 4 von DE-Offenlegungsschrift 26 24 527; Ausbeute: 90 % der Theorie; Siedepunkt bei 0,07 mm Hg: 115 °C

a) 580 g Permethyl-Tetraäthylenpentamin werden mit 170 g Ameisensäure teilneutralisiert und danach mit 320 g Diäthylenglykol vermischt. Es resultiert eine leicht gelbe Flüssigkeit der Viskosität 530 mPa s (25 °C).

b) 580 g Permethyl-Tetraäthylenpentamin werden mit 240 g wasserfreier Essigsäure teilneutralisiert und anschliessend mit 350 g Diäthylenglykol vermischt. Man erhält eine leicht gelbe Flüssigkeit der Viskosität 540 mPa s bei 24 °C.

c) 580 g Permethyl-Tetraäthylenpentamin werden mit 1130 g Ölsäure umgesetzt und danach mit 730 g Diäthylenglykol homogenisiert. Man erhält eine leicht gelbe Flüssigkeit der Viskosität 670 mPa s bei 25 °C.

Beispiel 3

Katalysatoren auf Basis von permethyliertem Triäthylentetramin (Herstellung des Tetramins: Beispiel 4 von DE-Offenlegungsschrift 26 24 527)

a) in 250 g Permethyl-Triäthylentetramin werden unter Rühren 75 g wasserfreie Ameisensäure eingetropft und anschliessend das Gemisch mit 140 g Diäthylenglykol verdünnt. Man erhält eine leicht gelbe Flüssigkeit der Viskosität 500 mPa s bei 25 °C.

b) in 250 g Permethyl-Triäthylentetramin werden unter Rühren 95 g wasserfreie Essigsäure getropft und anschliessend das Gemisch mit 150 g Diäthylenglykol versetzt. Man erhält eine leicht gelbe Flüssigkeit der Viskosität 480 mPa s bei 25 °C.

c) Zu 250 g Permethyl-Triäthylentetramin werden 450 g Ölsäure getropft und das Reaktionsgemisch mit 300 g Diäthylenglykol homogenisiert. Es resultiert eine leicht gelbe Flüssigkeit der Viskosität 630 mPa s bei 25 °C.

Beispiel 4

Katalysatoren auf Basis von Permethyl-Diäthylentriamin

a) Zu 173 g Permethyl-Diäthylentriamin werden unter Rühren 25 g wasserfreier Ameisensäure getropft und das Produkt anschliessend mit 85 g Diäthylenglykol verdünnt. Man erhält eine wasserhelle Flüssigkeit der Visk. 480 mPa s bei 25 °C.

b) In 173 g Permethyl-Diäthylentriamin werden unter Rühren 30 g wasserfreier Essigsäure eingetropft und das Produkt anschliessend mit 90 g Diäthylenglykol vermischt. Es resultiert eine wasserhelle Flüssigkeit der Viskosität 480 mPa s bei 25 °C.

c) In 173 g Permethyl-Diäthylentriamin werden unter Rühren 141 g Ölsäure getropft und das Gemisch anschliessend mit 135 g Diäthylenglykol homogenisiert. Es entsteht eine wasserhelle Flüssigkeit der Viskosität 590 mPa s bei 25 °C.

Beispiel 5

Ein Gemisch, bestehend aus

| | |
|---|---|
| 60 Teilen | eines Polyäthers der OH-Zahl 830, welcher durch Anlagerung von Propylenoxid an Trimethylolpropan erhalten worden ist, |
| 40 Teile | eines Polyäthers der OH-Zahl 42, welcher durch Anlagerung eines Gemisches aus Propylenoxid und Äthylenoxid an ein Gemisch von Trimethylolpropan und Propylenglykol (Molverhältnis: 3:1) erhalten worden ist, |
| 1 Teil | eines Polysiloxan-Polyalkylenoxid-Blockpolymerisats als Schaumstabilisator, |
| 12 Teile | Monofluortrichlormethan als Treibmittel und |
| 3,5 Teile | einer 70 %igen Lösung des Bisformiats von Permethyl-Tetraäthylenpentamin in Diäthylenglykol (Beispiel 2a) |

wird mittels eines Zweikomponenten-Dosiermischgerätes mit

| | |
|---|---|
| 13,2 Teilen | eines technischen Polyisocyanatgemisches, welches durch Phosgenierung eines Anilin-Formaldehyd-Kondensats hergestellt wurde (Viskosität bei 25 °C: 120 mPa s; NCO-Gehalt: 31%), |

vermischt und das schaumfähige Reaktionsgemisch in eine geschlossene, auf 60 °C temperierte Stahlform eingefüllt. Das Reaktionsgemisch beginnt nach 22 Sekunden zu schäumen und bindet bereits nach weiteren 23 Sekunden ab.

Nach einer Entformungszeit von 5 Minuten erhält man ein Integralschaumstoff-Formteil mit hoher Steifigkeit, dessen Gesamtrohdichte 600 kg/$m^3$ bei einer Wandstärke von 10 mm beträgt. Das Formteil weist eine einwandfreie, geschlossene Deckschicht auf, die weitgehend aus massivem Material besteht. Zur Mitte des Formteilquerschnitts hin nimmt die Rohdichte kontinuierlich ab.

Wiederholt man das Beispiel unter Verwendung von 3,5 Teilen einer 70 %igen Lösung des reinen Permethyl-Tetraäthylenpentamins in Diäthylenglykol, so beträgt die Startzeit des Reaktionsgemisches 12 Sekunden und die Abbindezeit weitere 20 Sekunden.

Beispiel 6

100 Teile eines Anlagerungsproduktes von Propylenoxid an Trimethylolpropan, welches mit Äthylenoxid so modifiziert wurde, dass ein Polyäther mit einer OH-Zahl von 28 und 80 % an endständigen primären Hydroxylgruppen resultiert,

| | |
|---|---|
| 3,0 Teile | Wasser |
| 0,27 Teile | Diazabicyclo [2,2,2]octan, |
| 0,2 Gew.-Teile | eines Polysiloxans gemäss DE-Auslegeschrift 2 232 525 und jeweils |
| 0,5 Teile | der Aktivatoren gemäss Beispiel 2, 3 und 4 werden mit |
| 51,75 Teilen | eines Polyisocyanatgemisches (bestehend aus 20 % 2,4'-Diphenylmethandiisocyanat, 65 % 4,4' -Di- |

phenylmethandiisocyanat und 15 % an mehrkernigen Polyphenylpolymethylenpolyisocyanaten) vermischt und das Reaktionsgemisch in einer offenen Form aufschäumen gelassen.

Bei allen Ansätzen werden die Startzeit, die Steigzeit und die Abbindezeit des Reaktionsgemisches sowie das Raumgewicht des Schaums (DIN 53 420) und dessen Strukturfestigkeit (im Druckversuch gemäss DIN 53 577) bestimmt. Die Ergebnisse sind in der folgenden Tabelle zusammengestellt.

Tabelle

| Katalysator aus Beispiel | Startzeit (sec) | Steigzeit (sec) | Abbindezeit (sec) | Raumgewicht ($kg/m^3$) | Durckversuch (kPa) |
|---|---|---|---|---|---|
| 1a | 18 | 75 | 59 | 42 | 5,3 |
| 1b | 17 | 73 | 57 | 42 | 5,3 |
| 1c | 19 | 69 | 55 | 40 | 5,0 |
| 2a | 20 | 80 | 63 | 45 | 5,9 |
| 2b | 19 | 77 | 60 | 47 | 5,8 |
| 2c | 18 | 80 | 60 | 52 | 7,5 |
| 3a | 18 | 72 | 55 | 44 | 5,6 |
| 3b | 18 | 76 | 56 | 45 | 5,8 |
| 3c | 16 | 71 | 55 | 43 | 5,9 |
| 4a | 18 | 70 | 58 | 47 | 5,7 |
| 4b | 19 | 71 | 57 | 45 | 5,6 |
| 4c | 17 | 73 | 55 | 47 | 5,6 |
| Permethyltetraäthylenpentamin (Vergleich) | 7 | 48 | 34 | 45 | 5,9 |

**Patentansprüche**

1. Katalysatoren für das Polyisocyanat-Polyadditionsverfahren der allgemeinen Formel

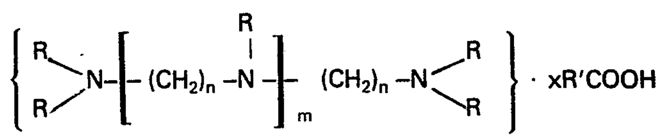

in welcher die Gruppen R gleich oder verschieden sind und für Alkylreste mit 1 bis 5 C-Atomen stehen,
m eine ganze Zahl zwischen 1 und 7 bedeutet, die ganzen Zahlen n gleich oder verschieden sind und für 2 oder 3 stehen, und
R′ Wasserstoff oder einen aliphatischen Rest mit 1 bis 25 C-Atomen bedeutet, welcher gegebenenfalls verzweigt ist und gegebenenfalls olefinische Doppelbindungen enthält, dadurch gekennzeichnet, dass
x eine Zahl im Bereich zwischen 0,15 (m+2) und 0,5 (m+2) darstellt.

2. Katalysatoren nach Anspruch 1, dadurch gekennzeichnet, dass
R für eine Methylgruppe steht,
n die Zahl 2 bedeutet und
m eine ganze Zahl zwischen 1 und 4 darstellt.

3. Katalysatoren nach Anspruch 2, dadurch gekennzeichnet, dass
m für die Zahlen 2 oder 3 steht.

4. Katalysatoren nach Anspruch 1, dadurch gekennzeichnet, dass sie die Formel

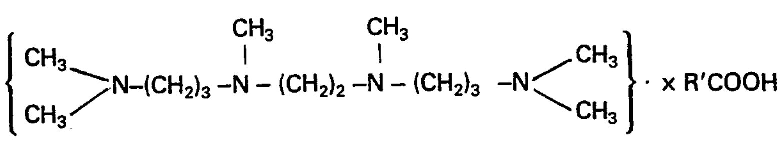

aufweisen, in welcher x und R′ die in Anspruch 1 angegebene Bedeutung besitzen.

5. Katalysatoren nach Anspruch 1 bis 4 dadurch gekennzeichnet, das R′ für Wasserstoff oder eine Methylgruppe steht.

6. Katalysator nach Anspruch 1, gekennzeichnet durch die Formel

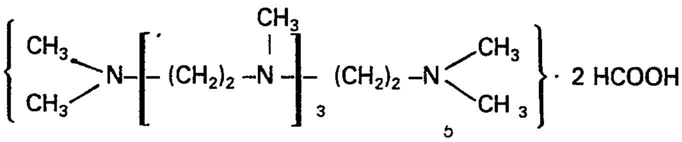

7. Verfahren zur Herstellung von gegebenenfalls zellförmigen Polyurethankunststoffen durch Umsetzung von
a) Polyisocyanaten mit
b) höhermolekularen Verbindungen mit mindestens 2 gegenüber Isocyanaten reaktionsfähigen Wasserstoffatomen sowie gegebenenfalls
c) Kettenverlängerungsmitteln, in Gegenwart von
d) tertiären Aminen als Katalysatoren, gegebenenfalls unter Mitverwendung von
e) Treibmitteln, Stabilisatoren und weiteren an sich bekannten Zusatzstoffen, dadurch gekennzeichnet, dass als Komponente d) Katalysatoren gemäss Anspruch 1–6 eingesetzt werden.

**Revendications**

1. Catalyseurs pour le procédé de polyaddition aux polyisocyanates, de formule générale:

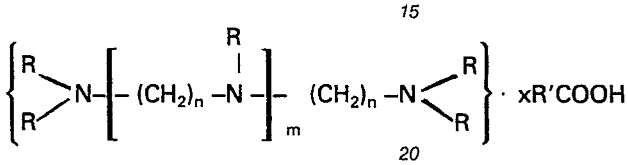

dans laquelle les groupes R sont identiques ou différents et représentent des radicaux alcoyle ayant 1 à 5 atomes de carbone,
m signifie un nombre entier entre 1 et 7, les nombres entiers n sont identiques ou différents et représentent 2 ou 3, et
R′ signifie de l'hydrogène ou un radical aliphatique ayant 1 à 25 atomes de carbone qui éventuellement est ramifié et qui contient éventuellement des doubles liaisons oléfiniques, caractérisé en ce que x représente un nombre dans l'intervalle entre 0,15 (m+2) et 0,5 (m+2).

2. Catalyseurs selon la revendication 1, caractérisés en ce que
R représente un groupe méthyle,
n signifie le nombre 2 et
m représente un nombre entier entre 1 et 4.

3. Catalyseurs selon la revendication 2, caractérisés en ce que
m représente les nombres 2 ou 3.

4. Catalyseurs selon la revendication 1, caractérisés en ce qu'ils présentent la formule:

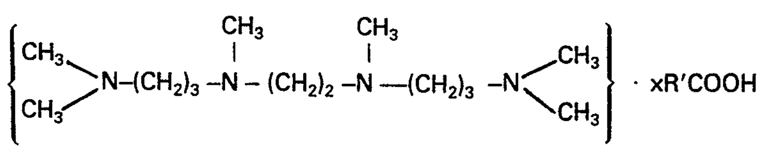

dans laquelle x et R′ possèdent la signification indiquée à la revendication 1.

5. Catalyseurs selon les revendications 1 à 4, caractérisé en ce que R′ représente de l'hydrogène ou un groupe méthyle.

6. Catalyseur selon la revendication 1, caractérisé par la formule:

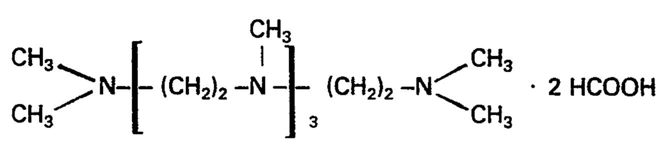

7. Procédé de fabrication de matières plastiques de polyuréthanes éventuellement cellulaires par réaction
a) de polyisocyanates avec
b) des composés à poids moléculaire élevé ayant au moins deux atomes d'hydrogène capables de réagir avec les isocyanates, de même qu'éventuellement
c) des agents d'allongement de chaîne, en présence
d) d'amines tertiaires comme catalyseurs, éventuellement avec utilisation conjointe
e) d'agents expanseurs, de stabilisants et d'autres additifs connus en eux-mêmes, caractérisé en ce qu'en tant que composant d) on utilise des catalyseurs selon les revendications 1 à 6.

**Claims**

1. Catalysts for the polyisocyanate polyaddition process, of the general formula

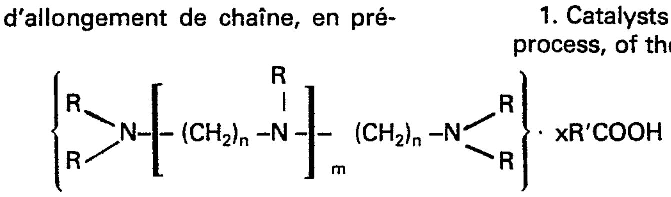

in which the groups R are identical or different and represent alkyl radicals with 1 to 5 C atoms,
m denotes an integer between 1 and 7, the integers n are identical or different and represent 2 or 3, and
R′ denotes hydrogen or an aliphatic radical having

1 to 25 C atoms, which may be branched and which may contain olefinic double bonds, characterised in that
x represents a number in the range between 0,15 (m+2) and 0,5 (m+2).

2. Catalysts according to Claim 1, characterised in that R represents a methyl group,
n denotes the number 2 and
m represents an integer between 1 and 4.

3. Catalysts according to Claim 2, characterised in that m represents the numbers 2 or 3.

4. Catalysts according to Claim 1, characterised in that they are of the formula

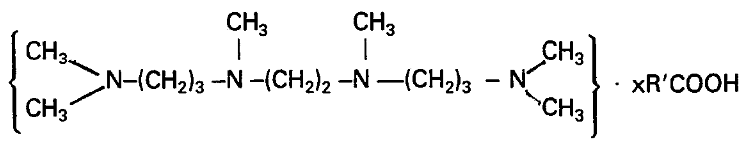

in which
x and R′ have the meaning indicated in Claim 1.

5. Catalysts according to Claims 1 to 4, characterised in that
R′ represents hydrogen or a methyl group.

6. Catalyst according to Claim 1, characterised by the formula

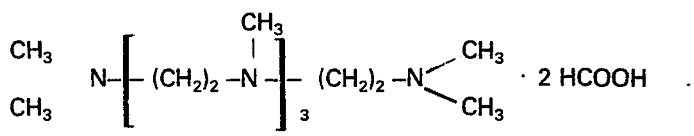

7. Process for the production of optionally cellular polyurethane plastics by reacting
a) polyisocyanates with
b) higher molecular weigt compounds having at least 2 isocyanate-reactive hydrogen atoms and optionally
c) chain lengthening agents, in the presence of
d) tertiary amines as catalysts, optionally with the addition of
e) blowing agents, stabilizers and other known additives, characterised in that catalysts according to Claims 1 – 6 are used as component d).